# EUROPÄISCHE PATENTANMELDUNG

(11) **EP 1 898 507 A2**
(43) Veröffentlichungstag der Anmeldung: **12.03.2008**
(21) Anmeldenummer: 07110380.8
(22) Anmeldetag: 15.06.2007
(51) Int. Cl.: H02G 3/22

(54) **Kabeldurchführung**

(30) Priorität: 08.09.2006 DE 102006042192
(71) Anmelder: MEKRA Lang GmbH & Co. KG, 90765 Fürth (DE)
(72) Erfinder: Heller, Uwe, 91438 Bad Windsheim (DE); Lang, Werner, Dr., 91465 Ergersheim (DE); Herrler, Manfred, 91126 Schwabach (DE)
(74) Vertreter: Winter, Brandl, Fürniss, Hübner Röss, Kaiser, Polte Partnerschaft Patent- und Rechtsanwaltskanzlei

(57) **Zusammenfassung**

Es wird eine Kabeldurchführung, eine Kabeltülle und eine Gehäuseabdeckung mit einer hierfür geeigneten Kabeldurchführungsöffnung bereitgestellt. Es wird eine Kabeldurchführungen insbesondere für den automotiven Bereich bereitgestellt, die eine Zugentlastung bereitstellt, geringe Abmessungen aufweist, das Kabel mechanisch schützt, feuchtigkeitsdicht ist und mit geringem Montageaufwand montiert und demontiert werden kann. Durch die Ausgestaltung der Kabeldurchführungsöffnung mit unterschiedlich breiten Bereichen kann eine entsprechend geformte Kabeltülle mit Hinterschneidungsbereichen auf einfache Weise eingesetzt und mittels Klemmschluss zwischen den Hinterschneidungsbereichen und den Befestigungskanten im zweiten Bereich der Kabeldurchführungsöffnung eingeklemmt werden. Durch die Dimensionierung und die Anordnung des Abdeckteils relativ zu dem Kabel wird eine sichere Feuchtigkeitsdichte Kabeldurchführung geschaffen. Die Form des Abdeckteils und des Befestigungsteils in Aufsicht kann nahezu beliebig sein, z. B. rechteckig, oval, rund etc..

## Beschreibung

Die vorliegende Erfindung betrifft eine Kabeldurchführung nach Anspruch 1, eine Kabeltülle hierfür nach Anspruch 15 ein Gehäuse oder eine Gehäuseabdeckung mit einer hierfür geeigneten Kabeldurchführungsöffnung nach Anspruch 18.

Kabeldurchführungen sowie Kabeltüllen hierfür sind in unterschiedlichsten Ausführungsformen bekannt. Für den automotiven Bereich, z. B. um die elektrischen Leitung aus einem Gehäuse mit elektrischen oder elektronischen Bauteilen herauszuführen, wird gefordert, dass die Kabeldurchführung eine Zugentlastung bereitstellt, geringe Abmessungen aufweist, das Kabel mechanisch schützt, Feuchtigkeitsdicht ist und mit geringem Montageaufwand montiert und demontiert werden kann. Bekannte Kabeldurchführungen, wie sie z. B. durch die Firma HellermannTyton vertrieben werden, erfüllen nicht alle Anforderungen in ausreichendem Maße gleichzeitig.

Es ist daher Aufgabe der vorliegenden Erfindung eine Kabeldurchführung sowie eine Kabeltülle hierfür anzugeben, die die verschiedenen Anforderungen im automotiven Bereich besser erfüllt. Weiter ist es Aufgabe der vorliegenden Erfindung ein Gehäuse oder eine Gehäuseabdeckung mit einer hierfür geeigneten Kabeldurchführungsöffnung anzugeben.

Die Lösung dieser Aufgabe erfolgt durch die Merkmale des Anspruchs 1 bzw. 16 bzw. 19.

Durch die Ausgestaltung der Kabeldurchführungsöffnung mit unterschiedlich breiten Bereichen kann eine entsprechend geformte Kabeltülle mit Hinterschneidungsbereichen auf einfache Weise eingesetzt und mittels Klemmschluss zwischen den Hinterschneidungsbereichen und den Befestigungskanten im zweiten Bereich der Kabeldurchführungsöffnung eingeklemmt werden. Durch die Dimensionierung und die Anordnung des Abdeckteils relativ zu dem Kabel wird eine sichere Feuchtigkeitsdichte Kabeldurchführung geschaffen. Die Form des Abdeckteils und des Befestigungsteils in Aufsicht kann nahezu beliebig sein, z. B. rechteckig, oval, rund etc..

Die Erfindung eignet sich besonders für Kabeldurchführungen mit großen Steckern - der Querschnitt des Steckers ist größer als der Kabelquerschnitt. Derartige Stecker bedingen Kabeldurchführungsöffnungen mit großem Querschnitt, die dann entsprechend schwierig abzudichten sind. Durch die erfindungsgemäße Ausgestaltung der Kabeldurchführungsöffnung mit zwei Bereichen ist Platz genug, um auch große Stecker bei der Montage durch die Kabeldurchführungsöffnung zu führen.

Gemäß einer vorteilhaften Ausgestaltung der Erfindung ist die Kabeldurchführungsöffnung in eine wannenartige Vertiefung eingebettet. Hierdurch und dadurch, dass die Form der wannenartigen Vertiefung komplementär zur äußeren Form des Abdeckteils ist, wird die Dichtigkeit der Kabeldurchführung verbessert - Anspruch 2.

Vorzugsweise ist hierbei die Dicke des Abdeckteils im Randbereich gleich der Tiefe der wannenartigen Vertiefung gewählt. Hierdurch fluchtet die Oberkante des Gehäuses mit der Ober- oder Außenseite des Abdeckteils und ein versehentliches Wegklappen des Abdeckteils wird verhindert - Anspruch 3.

Gemäß einer vorteilhaften Ausgestaltung der Erfindung verlaufen die Befestigungskanten parallel zueinander und liegen folglich in einer Ebene. Hierdurch wird eine einfache Herstellung und ein sicherer Halt der Kabeltülle zwischen den beiden Befestigungskanten durch Klemmung ermöglicht - Anspruch 4 und 21.

In gleicher Weise ermöglicht die vorteilhafte Ausgestaltung mit parallelen, in einer Ebene liegenden Seitenkanten im ersten Bereich der Kabeldurchführungsöffnung eine einfache Herstellung - Anspruch 5 und 22.

Gemäß einer vorteilhaften Ausgestaltung der Erfindung wird zwischen dem ersten und dem zweiten Bereich der Kabeldurchführungsöffnung ein sich insbesondere v-förmiger Übergangsbereich vorgesehen. Hierdurch wird das Einschieben und Einklemmen der Kabeltülle in den zweiten Bereich zwischen die beiden Befestigungskanten erleichtert - Ansprüche 6, 7, 23 und 24.

Gemäß einer vorteilhaften Ausgestaltung der Erfindung ist in Aufsicht betrachtet die Form des zweiten Bereichs der Kabeldurchführungsöffnung komplementär zu der äußeren Form des Befestigungsteils der Kabeltülle. Hierdurch wird zum einen die leichte Einführbarkeit der Kabeltülle in den ersten Bereich gewährleistet und gleichzeitig wird kein Platz unnötig vergeudet - Anspruch 9.

In vorteilhafter Weise ist hierbei der zweite Bereich und das Befestigungsteil rechteckig. Hierdurch vereinfacht sich die Herstellung - Ansprüche 10 und 11.

Gemäß einer vorteilhaften Ausgestaltung der Erfindung ist die Tiefe der Hinterschneidungsbereich im Befestigungsteil am in Einschubrichtung vorderen Ende des Befestigungsteils vergrößert. Hierdurch wird das Einschieben und Einklemmen der Kabeltülle in den zweiten Bereich der Kabeldurchführungsöffnung erleichtert - Anspruch 14 und 18.

Gemäß einer vorteilhaften Ausgestaltung der Erfindung wird das Abdeckteil außermittig von dem Kabel durchsetzt. Hierdurch wird erreicht, dass bei vollständig in den zweiten Bereich eingeschobener Kabeltülle das Abdeckteil in die Kabeldurchführungsöffnung vollständig überdeckt. Wenn die Kabeldurchführungsöffnung in einer wannenartigen Vertiefung liegt, kommt das Abdeckteil in der wannenartigen Vertiefung zu liegen - Anspruch 15.

Die weiteren Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer bevorzugten Ausführungsform anhand der Zeichnungen.

Es zeigt:
- Fig. 1: eine perspektivische Darstellung der beispielhaften Ausführungsform der Erfindung wobei das Kabel mit Kabeltüll nicht in die Kabeldurchführungsöffnung eingesetzt ist;
- Fig. 2a: eine Aufsicht auf die Kabeldurchführungsöffnung;
- Fig. 2b: eine Schnittansicht entlang der Linie A-A in Fig. 2a;
- Fig. 3a: eine Aufsicht auf die Kabeltülle von der Seite des Kabelsteckers;
- Fig. 3b: eine Schnittansicht entlang des Kabels von der Seite;
- Fig. 3c: eine Schnittansicht entlang des Kabels von oben oder unten;
- Fig. 4a: eine perspektivische Darstellung mit in den ersten Bereich der Kabeldurchführungsöffnung eingesetzter Kabeltülle mit Kabel von außen;
- Fig. 4b: eine perspektivische Darstellung mit in den ersten Bereich der Kabeldurchführungsöffnung eingesetzter Kabeltülle mit Kabel von innen;
- Fig. 5a: eine perspektivische Darstellung mit halb in den zweiten Bereich der Kabeldurchführungsöffnung eingeschobener Kabeltülle mit Kabel von außen;
- Fig. 5b: eine perspektivische Darstellung mit halb in den zweiten Bereich der Kabeldurchführungsöffnung eingeschobener Kabeltülle mit Kabel von innen;
- Fig. 6a: eine perspektivische Darstellung mit vollständig in den zweiten Bereich der Kabeldurchführungsöffnung eingeschobener Kabeltülle mit Kabel von außen; und
- Fig. 6b: eine perspektivische Darstellung mit vollständig in den zweiten Bereich der Kabeldurchführungsöffnung eingeschobener Kabeltülle mit Kabel von außen.

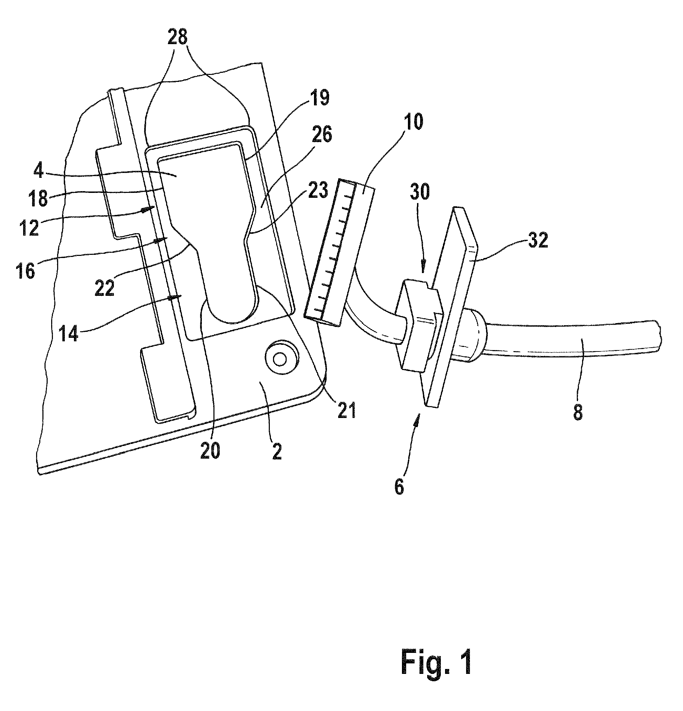

Fig. 1 zeigt perspektivische Darstellung einer beispielhaften Ausführungsform der Erfindung mit einer Gehäuseabdeckung 2 mit einer Kabeldurchführungsöffnung 4 und einem Kabeltülle 6, das fest mit einem Kabel 8 verbunden ist. Das Kabel 8 mit Kabeltülle 6 ist nicht in die Kabeldurchführungsöffnung 4 eingesetzt, d. h. die Kabeldurchführung ist demontiert. Das vordere Ende des Kabels 8 ist mit einem Stecker 10 verbunden. Die Kabeldurchführungsöffnung 4 und der Stecker 10 sind so dimensioniert, dass der Stecker 10 durch die Kabeldurchführungsöffnung hindurchgeführt werden kann.

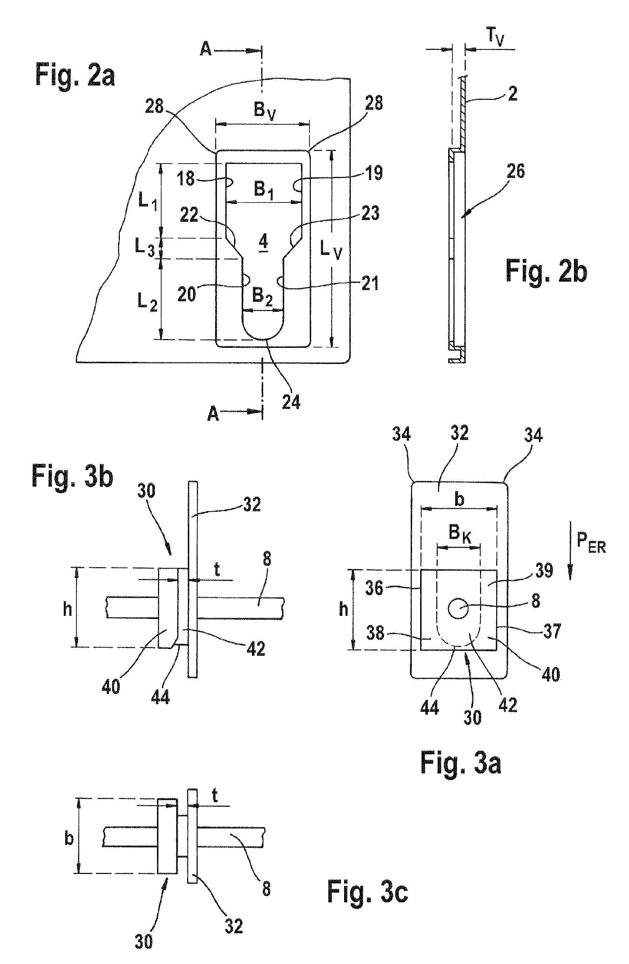

Wie insbesondere auch aus Fig. 2a zu ersehen ist, umfasst die Kabeldurchführungsöffnung 4 einen ersten rechteckigen Bereich 12, einen zweiten Bereich 14 und einen zwischen dem ersten und dem zweiten Bereich 12, 14 angeordneten Übergangsbereich 16. Der erste Bereich umfasst zwei parallel zueinander verlaufenden Seitenkanten 18 und 19. Ebenso umfasst der zweite Bereich 14 zwei parallel verlaufende Seitenkanten 20 und 21, die parallel verlaufen, in der gleichen Ebene wie die beiden Seitenkanten 18 und 19 des ersten Bereichs 12 liegen und als linke und rechte Befestigungskante dienen. Der erste Bereich 12 weist eine erste Breite B₁ - Abstand zwischen den beiden Seitenkante 18, 19 - und eine erste Länge L₁ auf. Der zweite Bereich 14 weist eine zweite Breite B₂ - Abstand zwischen den beiden Seitenkanten 20 und 21 - und eine zweite Länge L₂ auf. Die erste Breite B₁ ist größer als die zweite Breite B₂. Die erste Länge L₁ entspricht etwa der zweiten Länge L₂. Der Übergangsbereich 16 weist eine dritte Länge L₃ und zwei v-förmig zueinander verlaufende Seitenkanten 22 und 23 auf. Das dem Übergangsbereich 16 gegenüberliegende Ende 24 des zweiten Bereichs 14 ist gerundet siehe Fig. 2a. Wie aus Fig. 2b zu ersehen ist, liegt die gesamte Kabeldurchführungsöffnung 4 in einer Ebene und ist in einer wannenartigen Vertiefung 26 angeordnet. Die Vertiefung 26 ist rechteckig mit gerundeten Ecken 28 und weist eine Länge L_{V}, eine Breite B_{V} und eine Tiefe T_{V} auf.

Unter Bezugnahme auf Fig. 3 wird nachfolgend die Kabeltülle 6 mit Kabel 8 beschrieben. Die Kabeltülle 6 umfasst ein Befestigungsteil 30 und ein Abdeckteil 32. Sowohl das Abdeckteil 32 als auch das Befestigungsteil 30 sind in Aufsicht betrachtet - Fig. 3a - rechteckig, wobei das Abdeckteil 32 gerundete Ecken 34 aufweist. Das Befestigungsteil 30 weist eine linke und eine rechte Seitenkante 36 bzw. 37 auf. Das Befestigungsteil 30 weist im Bereich der beiden Seitenkanten 36, 37 einen linken und einen rechten Hinterschneidungsbereich 38, 39 auf. Durch die Hinterschneidungsbereiche 38, 39 umfasst das Befestigungsteil 30 ein Halteteil 40 mit der Breite b und der Höhe h und ein Klemmteil 42, das das Halteteil 40 mit dem Abdeckteil 32 verbindet. Das Klemmteil 42 weist eine Breite B_{K} auf, die etwas größer als die zweite Breite B₂ des zweiten Bereichs 14 ist. Die Höhe des Klemmteils 42 ist gleich der Höhe h des Halteteils 40. Die Tiefe t der Hinterschneidungsbereiche 38, 39 ist im Bereich des in Einschubrichtung - Pfeil P_{ER} - vorderen Endes 44 des Klemmteils 42 vergrößert. Die Kabeltülle 6 besteht aus einem leicht elastischem Kunststoff, z. B. aus TPE. Das Kabel 8 ist mit der Kabeltülle 6 flüssigkeitsdicht verbunden.

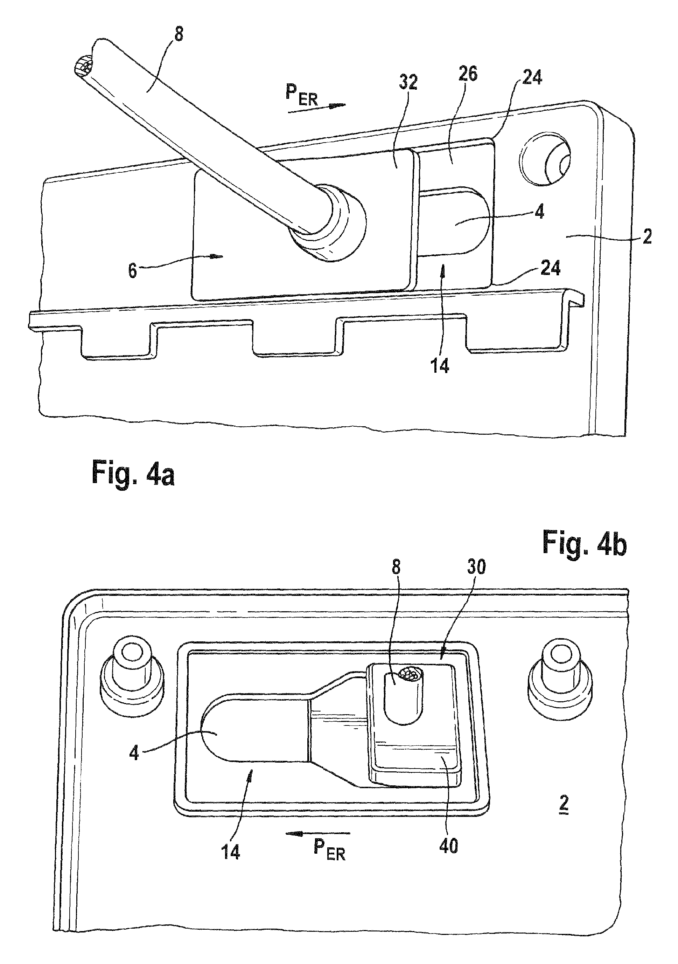

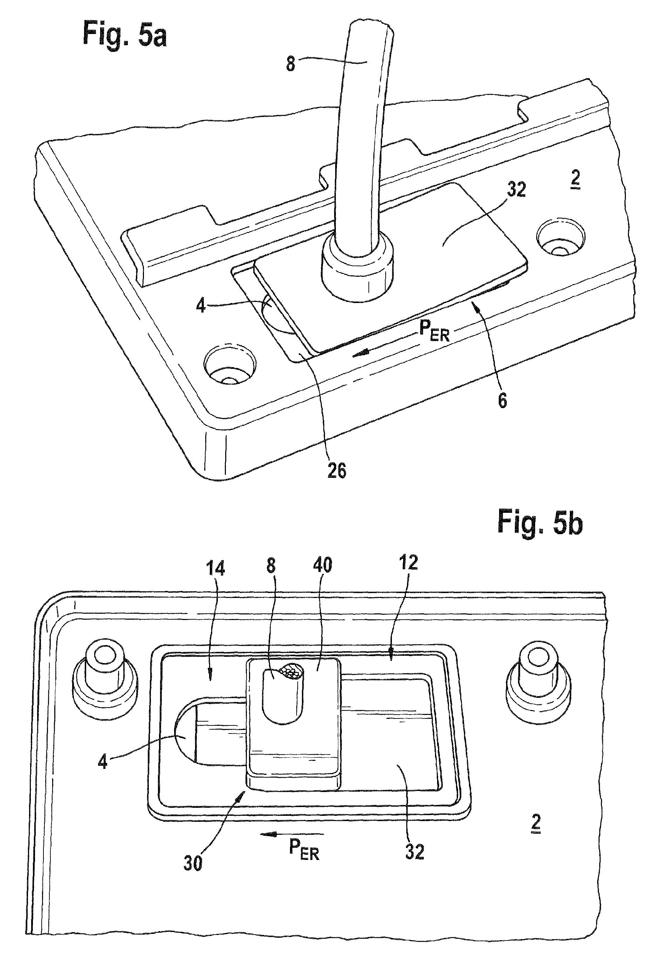

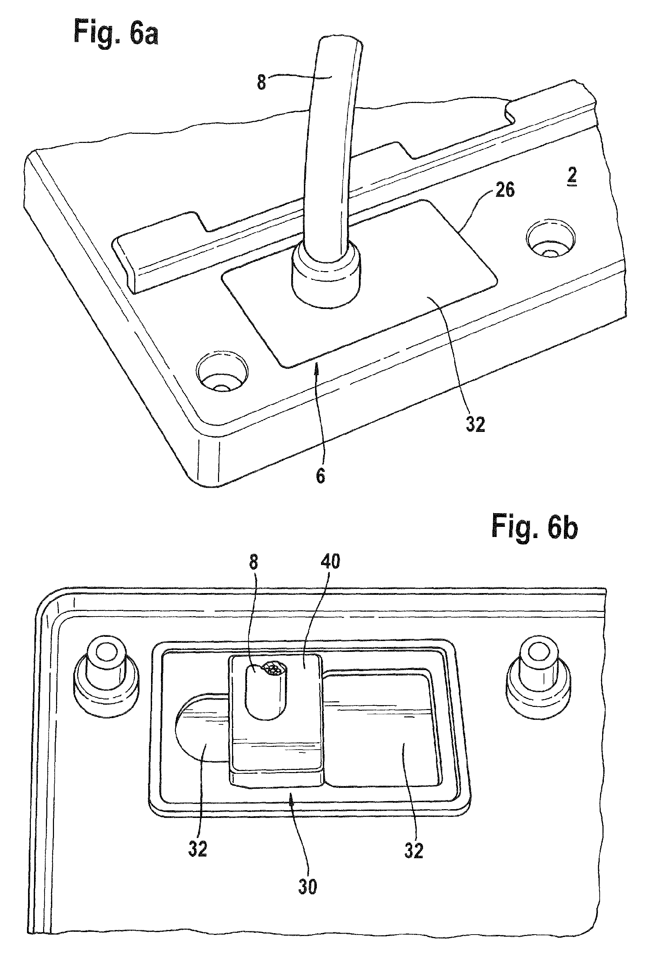

Anhand der Figuren 4 bis 6 wird die Montage der der Kabeltülle 6 mit Kabel 8 in der Kabeldurchführungsöffnung 4 beschrieben. Zunächst wird der Stecker 10 durch die Kabeldurchführungsöffnung 4 geführt und anschließend wird das Befestigungsteil 30 in den ersten 'Bereich 12 der Kabeldurchführungsöffnung 4 eingesetzt, wie dies in den Figuren 4a und 4b gezeigt ist. Dann wird die Kabeltülle 6 in Einschubrichtung verschoben, wie dies in Fig. 5a und 5b durch den Pfeil P_{ER} dargestellt ist. Durch den in Einschubrichtung P_{ER} sich v-förmig sich verjüngenden Übergangsbereich 16 wird das Einschieben und Einklemmen des Klemmteils 42 zwischen die beiden Befestigungskanten 20, 21 erleichtert. Auch durch die größere Tiefe t der Hinterschneidungsbereiche 38, 39 ist im Bereich des in Einschubrichtung - Pfeil P_{ER} - vorderen Endes 44 des Klemmteils 42 wird das Einschieben der Kabeltülle 6 bzw. des Klemmteils 42 zwischen die beiden Befestigungskanten 20, 21 erleichtert. Durch dieses Einschieben greifen die beiden Hinterschneidungsbereiche 38, 39 in die beiden Befestigungskanten 20, 21 ein und das Klemmteil 42 wird aufgrund seiner Breite B_{K} > B₂ zwischen den beiden Befestigungskanten 20, 21 eingeklemmt. Die vollständig in den zweiten Bereich 14 eingeschobene Kabeltülle 6 mit Kabel 8 ist in den Figuren 6a und 6b dargestellt. Das in Einschubrichtung vordere Ende 44 des Klemmteils 42 ist komplementär zu dem gerundeten Ende 24 des zweiten Bereichs 14 gerundet, so dass das Ende 44 gegenüber dem gerundeten Ende 24 abdichtet. Das Abdeckteil 32 ist so in Relation zu dem Kabel 8 und dem Befestigungsteil 30 angeordnet, dass bei vollständig in den zweiten Bereich 14 eingeschobener Kabeltülle 6 das Abdeckteil 32 die Kabeldurchführungsöffnung vollständig überdeckt und in der wannenartigen Vertiefung 26 zu liegen kommt. Da die wannenartige Vertiefung komplementär zu dem Abdeckteil 32 geformt ist, "passt" das Abdeckteil 32 genau in die wannenartige Vertiefung 26.

Die Dichtigkeit gegenüber Staub und Feuchtigkeit dieser Kabeldurchführung ist gleich oder besser als die Schutzklasse IP44 (IP Schutzklassensystem für Geräte in entsprechend belasteter Umgebung).

In der beispielhaften Ausführungsform durchsetzt das Kabel 8 die Kabeldurchführungsöffnung 4 senkrecht und wird auch senkrecht außerhalb der Gehäuseabdeckung 2 weggeführt. Alternativ ist auch eine Durchsetzung der Kabeldurchführungsöffnung mit einem von der Senkrechten abweichenden Winkel möglich und auch außerhalb oder innerhalb der Gehäuseabdeckung kann das Kabel 8 in beliebigen Winkeln zu der Senkrechten weitergeführt werden.

### Bezugszeichenliste:

- 2: Gehäuseabdeckung
- 4: Kabeldurchführungsöffnung
- 6: Kabeltülle
- 8: Kabel
- 10: Stecker
- 12: erster Bereich von 4
- 14: zweiter Bereich 4
- 16: Übergangsbereich von 4
- 18: linke Seitenkante von 12
- 19: rechte Seitenkante von 12
- 20: linke Seitenkante von 14 bzw. linke Befestigungskante
- 21: rechte Seitenkante von 14bzw. rechte Befestigungskante
- 22: linke Seitenkante von 16
- 23: rechte Seitenkante von 16
- 24: gerundetes Ende von 14
- 26: wannenartige Vertiefung in 2
- 28: Ecken von 26

- 30: Befestigungsteil
- 32: Abdeckteil
- 34: gerundete Ecken von 32
- 36: linke Seitenkante von 30
- 37: rechte Seitenkante von 30
- 38: linker Hinterschneidungsbereich
- 39: rechter Hinterschneidungsbereich
- 40: Halteteil von 30
- 42: Klemmteil von 30
- 44: vorderes Ende von 42

- L₁: erste Länge in 4
- L₂: zweite Länge in 4
- L₃: dritte Länge in 4
- B₁: erste Breite in 4
- B₂: zweite Breite in 4

- L_{V}: Länge von 24
- B_{V}: Breite von 24
- T_{V}: Tiefe von 24

- b: Breite von 30, 40
- h: Höhe von 30, 40, 42
- d: Dicke von 32
- B_{K}: Breite von 42
- t: Tiefe von 38, 39

- P_{ER}: Pfeil in Einschubrichtung

## Patentansprüche

1. Kabeldurchführung, mit
- einer Kabeldurchführungsöffnung (4) in einer Wand, insbesondere in einer Gehäusewand (2),
wobei die Kabeldurchführungsöffnung (4) einen ersten Bereich (12) mit einer ersten Breite (B₁) und einer ersten Länge (L₁) und einen zweiten Bereich (14) mit einer zweiten Breite (B₂) und einer zweiten Länge (L₂) aufweist,
wobei die erste Breite (B₁) größer als die zweite Breite (B₂) ist, und
wobei im zweiten Bereich (14) einander gegenüberliegende Seitenkanten (20, 21) als Befestigungskanten ausgebildet sind,
- einem Kabel (8),
- einer Kabeltülle (6), die vorzugsweise fest mit dem Kabel (8) verbunden ist,
wobei die Kabeltülle (6) ein Abdeckteil (32) umfasst, das sich quer zu dem Kabel (8) erstreckt und zum Überdecken der gesamten Kabeldurchführungsöffnung (4) ausgelegt ist,
wobei die Kabeltülle (6) ein Befestigungsteil (30) umfasst, das eine Breite (b) aufweist, die gleich oder kleiner als die erste Breite (B₁) des ersten Bereichs (12) und größer als die zweite Breite (B₂) des zweiten Bereichs (14) der Kabeldurchführungsöffnung ist, und das eine Höhe (h) aufweist, die kleiner ist als die erste Länge (L₁) des ersten Bereichs (12) der Kabeldurchführungsöffnung (4),
wobei das Befestigungsteil (30) entlang der Höhe (h) gegenüberliegende Hinterschneidungsbereiche (38, 39) aufweist in die die Befestigungskanten (20, 21) des zweiten Bereichs (14) der Kabeldurchführungsöffnung (4) einschiebbar sind, und
wobei das Abdeckteil (32) das Befestigungsteil (39) überdeckt.

2. Kabeldurchführung nach Anspruch 1, **dadurch gekennzeichnet, dass** die Kabeldurchführungsöffnung (4) von einer wannenförmigen Vertiefung (26) mit einer Tiefe (T_{V}) angeordnet ist, deren Form in Aufsicht betrachtet komplemetär zur äußeren Form des Abdeckteils (32) ist.

3. Kabeldurchführung nach Anspruch 2, **dadurch gekennzeichnet, dass** das Abdeckteil (32) zumindest in seinem Randbereich eine Dicke (d) aufweist, die in etwa gleich der Tiefe (T_{V}) der wannenförmigen Vertiefung (26) mit der Kabeldurchführungsöffnung (4) ist.

4. Kabeldurchführung nach einem der vorhergehenden Ansprüche, **dadurch gekennzeichnet, dass** die Befestigungskanten (20, 21) parallel zueinander verlaufen.

5. Kabeldurchführung nach einem der vorhergehenden Ansprüche, **dadurch gekennzeichnet, dass** der erste Bereich (12) zwei im Abstand der ersten Breite (B₁) zueinander angeordnete, parallel zueinander verlaufende Seitenkanten (18, 19) aufweist.

6. Kabeldurchführung nach einem der vorhergehenden Ansprüche, **dadurch gekennzeichnet, dass** die Kabeldurchführungsöffnung (4) einen zwischen dem ersten und dem zweiten Bereich (12, 14) angeordneten Übergangsbereich (16) aufweist, der sich in Aufsicht von der ersten Breite (B₁) zu der zweiten Breite (B₂) verjüngt.

7. Kabeldurchführung nach Anspruch 6, **dadurch gekennzeichnet, dass** sich der Übergangsbereich (16) der Kabeldurchführungsöffnung (4) V-förmig verjüngt.

8. Kabeldurchführung nach einem der vorhergehenden Ansprüche, **dadurch gekennzeichnet, dass** der zweite Bereich (14) der Kabeldurchführungsöffnung (4) in Aufsicht betrachtet an seinem dem Übergangsbereich (16) gegenüberliegenden Ende (24) gerundet ist.

9. Kabeldurchführung nach einem der vorhergehenden Ansprüche, **dadurch gekennzeichnet, dass** in Aufsicht betrachtet der erste Bereich (12) der Kabeldurchführungsöffnung (4) komplementär zu dem Befestigungsteil (30) geformt ist.

10. Kabeldurchführung nach einem der vorhergehenden Ansprüche, **dadurch gekennzeichnet, dass** in Aufsicht betrachtet der erste Bereich (12) der Kabeldurchführungsöffnung (4) rechteckig ist.

11. Kabeldurchführung nach einem der vorhergehenden Ansprüche, **dadurch gekennzeichnet, dass** in Aufsicht betrachtet das Befestigungsteil (30) rechteckig ist.

12. Kabeldurchführung nach einem der vorhergehenden Ansprüche, **dadurch gekennzeichnet, dass** wenigstens ein freies Ende des Kabels (8) mit einem Stecker (10) versehen ist.

13. Kabeldurchführung nach Anspruch 12, **dadurch gekennzeichnet, dass** der Querschnitt des Steckers (10) größer als der Querschnitt des Kabels (8) ist.

14. Kabeldurchführung nach einem der vorhergehenden Ansprüche, **dadurch gekennzeichnet, dass** die Tiefe (t) der Hinterschneidungsbereiche (38, 39) an dem Befestigungsteil (30) an dem in Einschubrichtung (P_{ER}) vorderen Ende (44) des Befestigungsteils (30) vergrößert ist.

15. Kabeldurchführung nach einem der vorhergehenden Ansprüche, **dadurch gekennzeichnet, dass** das Kabel (8) das Abdeckteil (32) außermittig durchsetzt.

16. Kabeltülle (6), insbesondere für eine Kabeldurchführung nach einem der vorhergehenden Ansprüche,
wobei die Kabeltülle (6) fest mit einem Kabel (8) verbindbar ist,
wobei die Kabeltülle (6) ein Abdeckteil (32) umfasst, das sich quer zu dem Kabel (8) erstreckt und zum Überdecken einer Kabeldurchführungsöffnung (4) dient,
wobei die Kabeltülle (6) ein Befestigungsteil (30) umfasst, das eine Breite (b) eine Höhe (h) aufweist,
wobei das Befestigungsteil entlang der Höhe (h) gegenüberliegende, parallel zueinander verlaufende Hinterschneidungsbereiche (38, 39) mit einer Tiefe (t) aufweist in die Befestigungskanten (20, 21) der Kabeldurchführungsöffnung (4) einschiebbar sind,
wobei das Abdeckteil (32) das Befestigungsteil (30) überdeckt, und
wobei das Kabel (8) das Abdeckteil (32) außermittig durchsetzt.

17. Kabeltülle nach Anspruch 16, **dadurch gekennzeichnet, dass** in Aufsicht betrachtet das Befestigungsteil (30) rechteckig ist.

18. Kabeltülle nach einem der vorhergehenden Ansprüche 16 bis 17, **dadurch gekennzeichnet, dass** im Längsschnitt entlang der Kabellänge von der Seite betrachtet die die Tiefe (t) der Hinterschneidungsbereiche (38, 39) an dem Befestigungsteil (30) an dem in Einschubrichtung (P_{ER}) vorderen Ende (44) des Befestigungsteils (30) vergrößert ist.

19. Gehäuse oder Gehäuseteil (2) mit einer Kabeldurchführungsöffnung (4), insbesondere für eine Kabeldurchführung oder eine Kabeltülle (6) nach einem der vorhergehenden Ansprüche,
wobei die Kabeldurchführungsöffnung (4) einen ersten Bereich (12) mit einer ersten Breite (B₁) und einer ersten Länge (L₁) und einen zweiten Bereich (14) mit einer zweiten Breite (B₂) und einer zweiten Länge (L₂) aufweist,
wobei die erste Breite (B₁) größer als die zweite Breite (B₂) ist, und
wobei im zweiten Bereich (14) einander gegenüberliegende Seitenkanten (20, 21) als Befestigungskanten (20, 21) für eine Kabeltülle (6) ausgebildet sind.

20. Gehäuse oder Gehäuseteil (2) mit einer Kabeldurchführungsöffnung (4) nach Anspruch 19, **dadurch gekennzeichnet, dass** die Kabeldurchführungsöffnung (4) in einer wannenförmigen Vertiefung (26) mit einer Tiefe (t) angeordnet ist.

21. Gehäuse oder Gehäuseteil (2) mit einer Kabeldurchführungsöffnung (4) nach Anspruch 19 oder 20, **dadurch gekennzeichnet, dass** die Befestigungskanten (20, 21) parallel zueinander verlaufen.

22. Gehäuse oder Gehäuseteil (2) mit einer Kabeldurchführungsöffnung (4) nach einem der vorhergehenden Ansprüche 19 bis 21, **dadurch gekennzeichnet, dass** der erste Bereich (12) der Kabeldurchführungsöffnung (4) zwei im Abstand der ersten Breite (B₁) zueinander angeordnete, parallel zueinander verlaufende Seitenkanten (18, 19) aufweist.

23. Gehäuse oder Gehäuseteil (2) mit einer Kabeldurchführungsöffnung (4) nach einem der vorhergehenden Ansprüche 19 bis 22, **dadurch gekennzeichnet, dass** die Kabeldurchführungsöffnung (4) einen zwischen dem ersten und dem zweiten Bereich (12, 14) angeordneten Übergangsbereich (16) aufweist, der sich in Aufsicht von der ersten Breite (B₁) zu der zweiten Breite (B₂) verjüngt.

24. Gehäuse oder Gehäuseteil (2) mit einer Kabeldurchführungsöffnung (4) nach Anspruch 23, **dadurch gekennzeichnet, dass** sich der Übergangsbereich (16) der Kabeldurchführungsöffnung (4) V-förmig verjüngt.

25. Gehäuse oder Gehäuseteil (2) mit einer Kabeldurchführungsöffnung (4) nach einem der vorhergehenden Ansprüche 19 bis 24, **dadurch gekennzeichnet, dass** der zweite Bereich (14) der Kabeldurchführungsöffnung (4) in Aufsicht betrachtet an seinem dem Übergangsbereich (16) gegenüberliegenden Ende (24) gerundet ist.
